# EUROPEAN PATENT SPECIFICATION

(11) **EP 2 047 748 B1**
(45) Date of publication and mention of the grant of the patent: **28.08.2013**
(21) Application number: 08164251.4
(22) Date of filing: 12.09.2008
(51) Int. Cl.: A01N 25/22, A01N 25/00, A01N 43/80, A01N 25/10, A01N 25/04, A01P 1/00

(54) **Steam stripping polymer dispersions to improve biocide stability**
Dampfstrippen von Polymerdispersionen, um die Biozidbeständigkeit zu verbessern
Dispersions de polymères d'extraction à la vapeur pour améliorer la stabilité biocide

(30) Priority: 24.09.2007 US 994974 P
(43) Date of publication of application: 15.04.2009
(73) Proprietor: Rohm and Haas Company, Philadelphia, PA 19106-2399 (US)
(72) Inventor: Carpenter, James Kent, Lambertville, PA 08530 (US); Gouveia, Colin, Ft. Washington, PA 19034 (US); Rudik, Zoya, Horsham, PA 19044 (US); Venter, Jeremia Jesaja, Warrington, PA 18976 (US)
(74) Representative: Kent, Venetia Katherine

(56) References cited:
- EP-A2- 1 077 237
- WO-A1-2006/086688
- US-A- 4 824 957
- US-A- 5 668 083
- DATABASE WPI Week 200532 Thomson Scientific, London, GB; AN 2005-310287 XP002670104, & JP 2005 097474 A (NIPPON A & L KK) 14 April 2005 (2005-04-14) -& JP 2005 097474 A (NIPPON A & L KK) 14 April 2005 (2005-04-14)
- DATABASE CA [Online] CHEMICAL ABSTRACTS SERVICE, COLUMBUS, OHIO, US; XP002670105, retrieved from STN-International accession no. 127:35966 & J.GILLATT: "The effect of redox chemistry on the efficacy of biocides in polymer emulsions", SURFACE COATINGS INTERNATIONAL, vol. 80, no. 4, 1997, pages 172-177,
- DATABASE WPI Week 200255 Thomson Scientific, London, GB; AN 2002-511920 XP002670106, & JP 2002 088681 A (NIPPON A & L KK) 27 March 2002 (2002-03-27) -& JP 2002 088681 A (NIPPON A & L KK) 27 March 2002 (2002-03-27)
- DATABASE WPI Week 199507 Thomson Scientific, London, GB; AN 1995-048949 XP002670107, & JP 6 329834 A (NIPPON GOSEI GOMU KK) 29 November 1994 (1994-11-29) -& JP 6 329834 A (JAPAN SYNTHETIC RUBBER CO LTD) 29 November 1994 (1994-11-29)

## Description

The present invention relates to a process for stripping polymer dispersions or as used herein, "dispersions", as a treatment to stabilize biocides.

As used herein by biocide is meant 3-Isothiazolone compounds of the form:

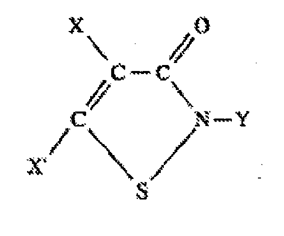

Where Y is an alkyl or substituted alkyl of 1 to 18 carbon atoms; an unsubstituted or halogen substituted alkenyl or alkynyl of about 2 to 8 carbon atoms; a cycloalkyl or substituted cycloalkyl or substituted cycloalkyl of about 3 to 12 carbon atoms; an aralkyl or halogen-, lower alkyl-, or lower alkoxy-substituted aralkyl of up to about 10 carbon atoms; or an aryl or halogen-, lower alkyl-, or lower alkoxy-substituted aryl of up to about 10 carbon atoms or hydrogen; X and X' are hydrogen, halogen, or a (C1-C4) alkyl; and X and X' combined are a fused aromatic.

These are a very important class of microbiocides. Several species have been commercialized and are widely used to inhibit the growth of bacteria, fungi, and algae. Some examples are methyl isothiazolone and 5-chloro 2-methyl 3-isothiazolone, 2-methyl 3-isothiazolone, 2-n-octyl 3-isothiazolone, and 1, 2-benz 3-isothiazolone.

The use of isothiazolone compounds as biocides, particularly 3-isothiazolones to control microbial growth in emulsions is well known to those experienced in the art. However one problem that exists with using isothiazolones in the polymer dispersion is that these compounds can be broken down by oxidizers and reductants found in the polymer dispersion, thus reducing the efficacy of the isothiazolones for preventing microbial growth.

As a solution to this problem, the art has attempted to stabilize these biocides. Traditionally, isothiazolone compounds have been stabilized in the dispersion environment by using inorganic metal compounds. Such inorganic metal compounds include but are not limited to metal nitrates and metal nitrate salts. Additionally, the use of copper as a stabilizing agent is well known. Although these metals help to stabilize the biocide components, their use is often undesirable in many applications. Metal compounds with higher valences can destabilize the dispersions. Destabilizing the dispersion creates aggregates known as gels which can detract from the performance of the dispersion.

JP 2005 097474 A, JP 2002 088 681 A, EP-A-1077237, JP 6 329 834 A and WO 2006/086688 disclose stripping a polymer dispersion followed by the addition of an Bothiazdone.

The present invention alleviates the need to use these metal compounds by stripping the dispersion, thus improving the stability of the isothiazolones.

In the present invention there is provided a process for stabilizing biocides in aqueous polymer dispersions as set out in the accompanying claims.

Aqueous polymer dispersions of the present invention may be prepared by emulsion, miniemulsion, or suspension, polymerization. Polymers formed by solution polymerization are specifically not contemplated by the present invention.

As used herein, steam is defined as an inert gas, or a combination of non-condensable inert gases saturated with water vapor.

The polymer dispersion and steam mixture may be contacted in a batch or continuous stripping apparatus. If continuous, the feed may be co-current or counter-current. As used herein "co-current" means both dispersion and steam enter and exit the stripper together. As used herein, counter-current means the dispersion enters the stripper where the steam exits and the steam enters the stripper where the dispersion exits.

The stripper apparatus may be operated in a batch, 1-stage continuous, or multi-stage continuous process. To that end, a single stripper, multiple strippers, single condenser, or multiple condensers may be used as the stripping apparatus. Any stripper apparatus currently known to those of ordinary skill in the art would be applicable to the present invention. Non-limiting examples of stripper apparatuses useful in the present invention include batch vacuum tank, jacketed, single pass shell and tube heat exchangers, multiple pass shell and tube heat exchangers, and spiral heat exchangers. There may be a single tube or multiple tubes in the shell of the stripper.

In the present invention, the at least one biocide is added to the polymer dispersion and steam mixture prior to being fed into the stripper. Non-limiting examples of biocides useful for the present invention include methyl isothiazolone and 5-chloro 2-methyl 3-isothiazolone, 2-methyl 3-isothiazolone, 2-n-octyl 3-isothiazolone, and 1, 2-benz 3-isothiazolone or mixtures thereof.

The dispersion polymers of the present invention are stripped at temperatures below 80° C. Stripping at higher temperatures, eg. Greater than 80° C causes undesirable properties such as gel formation and fouling of the equipment with the dispersion polymer.

The amount of biocide remaining in the compound mixture can be measured over time. This is referred to as the biocide stability. One advantage of the present invention is that after 7 days of shelf life at 50°C, up to 80% more of the original isothiazalone by weight is found in the stripped stabilized material over a similarly situated unstripped sample. After 14 days, at 50°C, up to 45% more of the original isothizalone by weight is found in the stripped stabilized material over a similarly situated unstripped sample.

The following is a non-limiting example that illustrates a few of the advantages of the present invention.

### EXAMPLE

### Test Method

### Heat Stabilization Test

28 grams of dispersion sample are placed in an oven at 50°C. At the end of seven days 1 gram of sample is removed for active ingredient analysis, to be measured according to the method below. At the end of fourteen days a second gram of sample is analyzed. The level of isothiazolone compound is measured in the material by the method described below. The results are compared against a zero time control. The control is a sample that has not been placed in the oven. The control is assayed on receipt.

### Isothiazolone Level Measurement

Dilute the dispersion sample with deionized water at a ratio of 9 parts water to 1 part dispersion. Mix the sample to extract the isothiazolone into the water (aqueous) phase. Centrifuge the sample and extract the clear liquid phase. Inject the clear liquid into HPLC testing machine, eg. Agilent 1100 Series, to measure the level of isothiazolone.

### Example: Comparison of Isothiazolone Stability for Stripped Versus Unstripped Samples

A polymeric dispersion was prepared in a 5-gallon, batch reactor. The dispersion was a butyl acrylate/styrene water based dispersion. The dispersion polymer was stabilized by surfactant and acrylic acid monomer. Solids of the resulting dispersion was 53-54% by weight. The final pH of the dispersion was between 6.8 and 7.8 and the viscosity was less than 200 cp.

The polymeric sample was separated into four parts. Each part had a combination of methyl isothiazolone (MIT) and chloro methyl isothiazolone (CMIT) added in the following ways:
Part 1. Isothiazolones added after polymerization of the batch.
Part 2. Isothiazolones added two hours after batch polymerization.
Part 3. Isothiazolones added after completion of the batch, then the dispersion sample was steam stripped.
Part 4. The sample is steam stripped, then the isothiazolones were added. (comparative example, not forming part of the invention)

The stripped samples were stripped with three passes through a single stage, continuous stripper. The relative flow rate of steam to dispersion during stripping was 1:5. If the stripped samples showed improved stability, the comparative, unstripped samples would have a lower concentration of biocide after a thermal stability test.

The samples were placed in an oven at 50°C for two weeks. The level of MIT and CMIT in each sample was measured at zero days, seven days, and fourteen days in the oven to test the stability of the biocide in the dispersion.

Part 2 above was a control sample with the hold period designed to represent the time required for stripping. The results of the experiment are shown in the tables below:

**Table 1**

| **Normal Biocide Addition** | | |
|---|---|---|
| Day | MIT level (ppm) | CMIT level (ppm) |
| 0 | 271.2 | 29.6 |
| 7 | 42.1 | 0 |
| 14 | 41.9 | 0 |

**Table 2**

| **Hold for 2 hours, Add Biocide** | | |
|---|---|---|
| Day | MIT level (ppm) | CMIT level (ppm) |
| 0 | 272.5 | 30.7 |
| 7 | 40.5 | 0 |
| 14 | 41 | 0 |

**Table 3**

| **Add Biocide, then strip** | | |
|---|---|---|
| Day | MIT level (ppm) | CMIT level (ppm) |
| 0 | 247.4 | 28.2 |
| 7 | 243 | 10.2 |
| 14 | 148.9 | 0 |

**Table 4**

| **Strip, then add biocide (comparative example, not forming part of the invention)** | | |
|---|---|---|
| Day | MIT level (ppm) | CMIT level (ppm) |
| 0 | 270.9 | 33.6 |
| 7 | 242.2 | 6.6 |
| 14 | 74.3 | 0 |

The MIT level in both unstripped samples dropped to 40-43 ppm after 7 days. The CMIT level in these samples dropped to 0 ppm after 7 days. In comparison, the stripped samples after 7 days had MIT levels of 243 and 242 ppm and CMIT levels of 10.2 and 6.6 ppm. After fourteen days no CMIT was detected, but some of the MIT remained in the stripped samples. There was a clear improvement in the stability of both isothiazolones for the stripped samples. The unstripped sample held for two hours before isothiazolone addition showed no difference in biocide level or biocide stability from the sample with isothiazolone added on completion of polymerization.

## Claims

1. A process for stabilizing biocides in aqueous polymer dispersions comprising:
providing an aqueous polymer dispersion and steam;
contacting the aqueous polymer dispersion and steam in a stripper;
separating the steam from the aqueous polymer dispersion;
wherein at least one biocide is added to the aqueous polymer dispersion before contacting the aqueous polymer dispersion and steam in a stripper,
and further wherein the biocide is a 3-isothiazolone compound of the form: 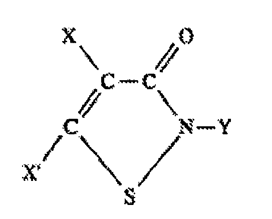 wherein Y is an alkyl or substituted alkyl of 1 to 18 carbon atoms; an unsubstituted or halogen substituted alkenyl or alkynyl of 2 to 8 carbon atoms; a cycloalkyl or substituted cycloalkyl or substituted cycloalkyl of 3 to 12 carbon atoms; an aralkyl or halogen-, lower alkyl-, or lower alkoxy-substituted aralkyl of up to 10 carbon atoms; or an aryl or halogen-, lower alkyl-, or lower alkoxy-substituted aryl of up to 10 carbon atoms or hydrogen; X and X' are hydrogen, halogen, or a (C1-C4) alkyl; and X and X' combined are a fused aromatic.

2. The process of claim 1 wherein the at least one biocide is selected from the group consisting of methyl isothiazolone, chloro methyl isothiazolone, or mixtures thereof.

3. The process of claim 1 wherein the stripper temperature is less than 80° C.

## Patentansprüche

1. Ein Verfahren zum Stabilisieren von Bioziden in wässrigen Polymerdispersionen, das Folgendes beinhaltet:
Bereitstellen von einer wässrigen Polymerdispersion und von Dampf;
In-Kontakt-Bringen der wässrigen Polymerdispersion und des Dampfes in einem Stripper;
Trennen des Dampfs von der wässrigen Polymerdispersion;
wobei vor dem In-Kontakt-Bringen der wässrigen Polymerdispersion und des Dampfes in einem Stripper mindestens ein Biozid zu der wässrigen Polymerdispersion hinzugefügt wird,
und wobei ferner das Biozid eine 3-Isothiazolon-Verbindung der folgenden Art ist: 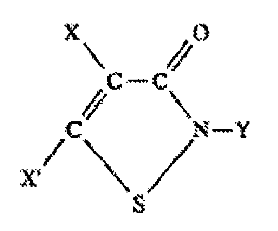 wobei Y ein Alkyl oder ein substituiertes Alkyl von 1 bis 18 Kohlenstoffatomen; ein nicht substituiertes oder Halogen substituiertes Alkenyl oder Alkynyl von 2 bis 8 Kohlenstoffatomen; ein Cycloalkyl oder substituiertes Cycloalkyl oder substituiertes Cycloalkyl von 3 bis 12 Kohlenstoffatomen; ein Aralkyl oder Halogen, niedrigeres Alkyl oder niedrigeres Alkoxy substituiertes Aralkyl von bis zu 10 Kohlenstoffatomen; oder ein Aryl oder Halogen, niedrigeres Alkyl, oder niedrigeres Alkoxy substituiertes Aryl von bis zu 10 Kohlenstoffatomen oder Wasserstoff ist; X und X' Wasserstoff, Halogen oder ein (C1-C4)-Alkyl sind; und X und X' kombiniert ein kondensierter Aromat sind.

2. Verfahren gemäß Anspruch 1, wobei das mindestens eine Biozid aus der Gruppe ausgewählt ist, die aus Methylisothiazolon, Chlormethylisothiazolon oder Mischungen daraus besteht.

3. Verfahren gemäß Anspruch 1, wobei die Strippertemperatur weniger als 80 °C beträgt.

## Revendications

1. Un procédé pour stabiliser des biocides dans des dispersions de polymère aqueuses comprenant le fait :
de fournir une dispersion de polymère aqueuse et de la vapeur ;
de mettre en contact la dispersion de polymère aqueuse et la vapeur dans un rectificateur ;
de séparer la vapeur de la dispersion de polymère aqueuse ;
dans lequel il est ajouté au moins un biocide à la dispersion de polymère aqueuse avant de mettre en contact la dispersion de polymère aqueuse et la vapeur dans un rectificateur,
et dans lequel en outre le biocide est un composé 3-isothiazolone de la forme : 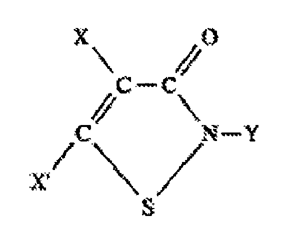 dans lequel Y est un alkyle ou un alkyle substitué ayant de 1 à 18 atomes de carbone ; un alcényle ou alcynyle non substitué ou substitué par un halogène ayant de 2 à 8 atomes de carbone ; un cycloalkyle ou cycloalkyle substitué ou cycloalkyle substitué ayant de 3 à 12 atomes de carbone ; un aralkyle ou aralkyle substitué par un halogène, alkyle inférieur, ou alcoxy inférieur ayant jusqu'à 10 atomes de carbone ; ou un aryle ou aryle substitué par un halogène, alkyle inférieur, ou alcoxy inférieur ayant jusqu'à 10 atomes de carbone ou l'hydrogène ; X et X' sont l'hydrogène, l'halogène ou un alkyle (C1-C4) ; et X et X' combinés sont un composé aromatique condensé.

2. Le procédé de la revendication 1 dans lequel l'au moins un biocide est sélectionné dans le groupe consistant en méthyl isothiazolone, chloro méthyl isothiazolone, ou des mélanges de ceux-ci.

3. Le procédé de la revendication 1 dans lequel la température du rectificateur est inférieure à 80 °C.
